# EUROPEAN PATENT APPLICATION

(11) **EP 4 530 259 A1**
(43) Date of publication of application: **02.04.2025**
(21) Application number: 24201614.5
(22) Date of filing: 20.09.2024
(51) Int. Cl.: C02F 1/463, C02F 1/00, C02F 1/28, B01J 20/02, B01J 20/06, C02F 1/461, C02F 101/10

(54) **PHOSPHORUS REMOVAL SYSTEM AND METHOD**

(30) Priority: 20.09.2023 GB 202314401
(71) Applicant: Going Engineering Ltd, Shaftesbury Dorset SP7 0AF (GB)
(72) Inventor: Butler, Stephen Mark, BA6 8RG Glastonbury (GB)
(74) Representative: Cyrson, Matthew Dominic

(57) **Abstract**

A phosphorus removal system (10) for removing phosphorus from wastewater. The system includes an electrocoagulation device (12) and a settlement container (14) fluidly communicable with the electrocoagulation container (16). A fluid moving means (32) is configured to selectively move wastewater from the electrocoagulation device (12) to the settlement container (14).

## Description

The present invention relates to a phosphorus removal system for the treatment of wastewater. The invention further relates to a method of removing phosphorus from wastewater.

It is generally required to remove phosphorus from wastewater, such as domestic wastewater, before being discharged as effluent into bodies of water. This is to reduce the risk of environmental damage to such bodies of water, for example via eutrophication.

Efficient removal of phosphorus is challenging, particularly when treating relatively small quantities of domestic wastewater.

Conventionally, chemical dosing is used to remove phosphorus. For example, an aluminium salt or ferric salt may be added to wastewater which reacts with the phosphorus to produce a phosphate precipitate, which can then be removed. However, the addition of salts can affect the acidity or basicity of the effluent, and therefore also cause an environmental damage when discharged.

Therefore, it would be desirable to remove phosphorus from domestic wastewater in an efficient manner without chemical dosing, and which is suitable for treating relatively small quantities of domestic wastewater.

The present invention seeks to provide a solution to these problems.

According to a first aspect of the present invention, there is provided a phosphorus removal system for removing phosphorus from wastewater, the phosphorus removal system comprising: an electrocoagulation device for removing phosphorus from wastewater via electrocoagulation, the electrocoagulation device including an electrocoagulation container for receiving wastewater, and at least one cathode and at least one anode in the electrocoagulation container; a settlement container fluidly communicable with the electrocoagulation container; and a fluid moving means configured to selectively move wastewater from the electrocoagulation device to the settlement container; so that first and second conditions are adoptable by the system, wherein in the first condition wastewater is movable from the electrocoagulation device to the settlement container, and wherein in the second condition wastewater is not movable from the electrocoagulation device to the settlement container.

The electrocoagulation device uses a sacrificial anode, typically made from aluminium or iron, to react with the phosphorus to produce a phosphate precipitate, which can then be removed from the wastewater.

The invention allows for a given quantity of wastewater to be processed by electrocoagulation for a given duration, before being removed therefrom and transferred to a settlement container.

The wastewater would be removed from the electrocoagulation device to the settlement container before settlement is fully complete. This allows for a more efficient use of resources, since the electrocoagulation device can be used on a new quantity of wastewater whilst the previous quantity of wastewater finishes settlement in a separate tank.

Additionally, the system allows for greater efficiency compared to a system where there is a continuous flow of wastewater past an electrocoagulation device. This is since, in the present system, the given quantity of wastewater can remain in contact with the electrocoagulation device for a longer duration, without requiring a very large electrocoagulation device.

As such, removal of phosphorus by electrocoagulation from relatively small amounts of domestic wastewater is feasible and cost-effective.

Preferably, the fluid moving means may comprise a pump.

Advantageously, the electrocoagulation container and the settlement container may be communicated via a conduit, the conduit having an inlet at the electrocoagulation container which in-use is offset from a bottom and a top of the electrocoagulation container. As such, the conduit does not draw wastewater from the top of the electrocoagulation container, and so avoids drawing in precipitates which are buoyant and floating at the wastewater level. Similarly, the conduit does not draw wastewater from the bottom of the container, and so avoids drawing in precipitates that have settled.

The electrocoagulation device may be a migration electric-field assisted electrocoagulation device and/or a low power migration field electrocoagulation device. Low Power Migration Field Electrocoagulation speeds up the electrocoagulation process such that real world quantities of effluent are able to be treated.

In a preferable embodiment, there may be a plurality of cathodes and a plurality of anodes.

Preferably, there is at least one sacrificial anode and at least one inert anode.

Optionally, the or each cathode and the or each anode are not plate-like. For example, the electrodes may have a rod shape and/or may be cylindrical.

Beneficially, there may be a spacing of between 5 mm and 30 mm between a cathode or anode and an adjacent cathode and/or anode. In other words, there may be a spacing of between 5 mm and 30 mm between adjacent electrodes.

Preferably, the cathodes and anodes may be arranged in an array.

Additionally, the array may have a hexagonal or honeycomb arrangement.

Such a configuration of anodes and cathodes allows for the electrocoagulation device to be easily customised and scaled up or down to suit different sizes of containers, whilst still maintaining an optimum spacing between adjacent electrodes.

Preferably, the or each anode comprises aluminium and/or iron.

Advantageously, the settlement container may comprise a baffle for encouraging settlement. This may reduce the time for settlement to occur, thereby resulting in a more efficient system since the time period for settlement in the settlement container may be similar or identical to the time period of electrocoagulation.

Beneficially, the baffle may comprise a plurality of plates. The plates may be lamellar plates and may be at an angle to the walls of the settlement container. This may encourage faster settlement.

In a preferable embodiment, the system may further comprise a sludge removal system comprising at least one sludge pump. This may allow for phosphate containing sludge to be removed from the system. The sludge could be processed to allow recycling of the phosphate for agricultural uses, for example.

Optionally, the sludge removal system may comprise an electrocoagulation-sludge conduit fluidly communicated with the electrocoagulation container, and the sludge pump is configured to pump sludge from the electrocoagulation container via the electrocoagulation-sludge conduit. Removing sludge from the electrocoagulation container before the wastewater is transferred to the settlement container can increase the speed of the phosphate removal process.

Preferably, the electrocoagulation-sludge conduit may comprise a first electrocoagulation-sludge conduit communicated with an in-use upper portion of the electrocoagulation container and a second electrocoagulation-sludge conduit communicated with an in-use lower portion of the electrocoagulation container. As such, buoyant sludge can be removed from the surface of the wastewater, and settled sludge can be removed from the bottom of the container.

Beneficially, the sludge removal system comprises a settlement-sludge conduit fluidly communicated with the settlement container, and the sludge pump is configured to pump sludge from the settlement container via the settlement-sludge conduit.

Advantageously, the phosphorus removal system may further comprise a further settlement container fluidly communicated with said settlement container. A further or second settlement container may allow for the further settlement of sludge after the wastewater is discharged from the first settlement container. Alternatively or additionally, a downstream filter may be used.

Preferably, the system may comprise an ochre filter device upstream of the electrocoagulation device for removing phosphorus from wastewater. The phosphorus in the wastewater may react with the ochre to produce phosphates which thus removes phosphorus from the wastewater.

The ochre may be mine drainage ochre. As such, the system utilises a waste resource.

Beneficially, the ochre filter device may comprise a plurality of ochre filters.

Advantageously, the ochre filters may have an offset relative to each other, the offset being in an in-use vertical direction.

Additionally, the ochre filters may be serially arranged so that wastewater is passable through each ochre filter on a respective filter flow path.

As such, this allows for wastewater to cascade down and through the ochre filters to remove phosphorus in an efficient manner.

Preferably, the ochre filter device comprises two filter flow paths, each filter flow path having a plurality of ochre filter elements. Each filter path may extend partially around the electrocoagulation device, which may be received at a central portion of the ochre filter device. This provides a space-efficient configuration.

According to a second aspect of the invention, there is provided a method of removing phosphorus from wastewater, the method comprising: a) providing an electrocoagulation device having an electrocoagulation container, and at least one cathode and at least one anode in the electrocoagulation container; b) discharging wastewater into the electrocoagulation container; c) removing phosphorus from the wastewater via electrocoagulation using the anode and cathode; d) initiating a fluid moving means to move wastewater from the electrocoagulation container into a settlement container; e) stopping the fluid moving means; f) discharging further wastewater into the electrocoagulation container.

According to a third aspect of the invention, there is provided a phosphorus removal system for removing phosphorus from wastewater, the phosphorus removal system comprising: an electrocoagulation device for removing phosphorus from wastewater via electrocoagulation, the electrocoagulation device including an electrocoagulation container for receiving wastewater, and at least one cathode and at least one anode in the electrocoagulation container; and an ochre filter device upstream of the electrocoagulation device for removing phosphorus from wastewater.

According to a fourth aspect of the invention, there is provided a phosphorus-removal electrocoagulation electrode array comprising a plurality of cathodes and a plurality of anodes in a hexagonal or honeycomb arrangement.

In particular, the electrode array may have two types of anodes; an inert anode and a sacrificial anode. There may therefore be a plurality of inert anodes and sacrificial anodes, as well as a plurality of cathodes. The electrode array may be configured to provide Low Power Migration Field Electrocoagulation.

The invention will now be more particularly described, by way of example only, with reference to the accompanying drawings, in which:
Figure 1 shows a representation of an embodiment of part of a phosphorus removal system in accordance with a first and third aspects of the invention;
Figure 2 shows a plan representation of an anode and cathode array in accordance with a fourth aspect of the invention and being of the phosphorus removal system of Figure 1;
Figure 3 shows a plan representation of an ochre filter device for use with the phosphorus removal system of Figure 1;
Figure 4 shows an enlargement of a collection chamber of the ochre filter device of Figure 3; and
Figure 5 shows a side representation of the ochre filter device of Figure 3;

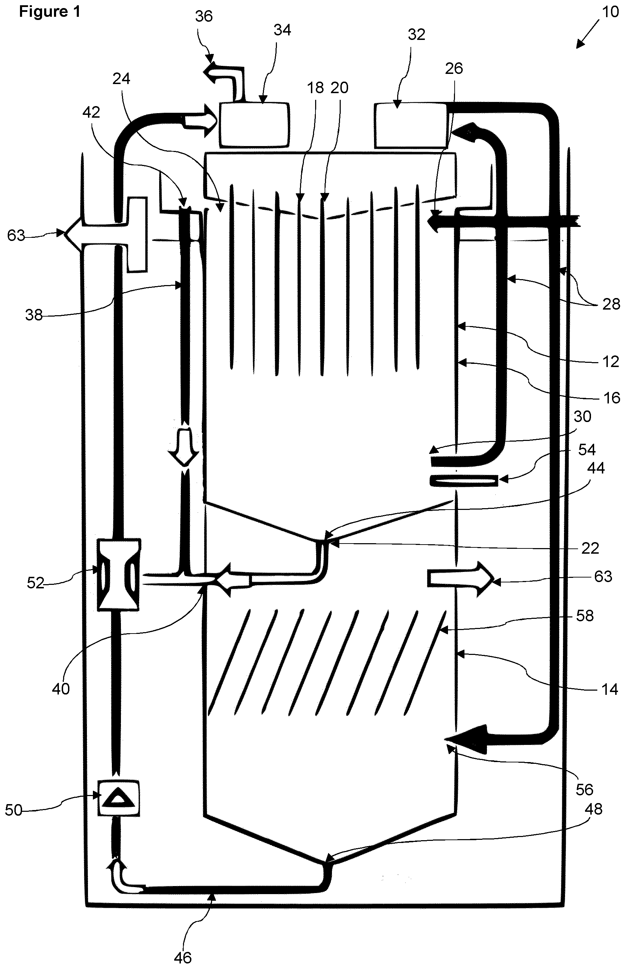

Referring firstly to Figure 1, there is shown a phosphorus removal system 10 which comprises an electrocoagulation device 12 and a settlement container 14. The settlement container 14 is fluidly communicated with, and separate to, the electrocoagulation device 12.

The electrocoagulation device 12 comprises an electrocoagulation container 16 for receiving wastewater, and at least one cathode 18 and at least one anode 20 in the electrocoagulation container 16. Further details of the cathodes 18 and anodes 20 will be provided hereinbelow.

The electrocoagulation container 16 may be termed a tank. The container 16 has a bottom 22 and a top 24, and here may be open topped. A bottom portion of the container 16 may be tapered.

The electrocoagulation container 16 includes an inlet 26 for receiving wastewater into the container.

A transfer conduit 28 for transferring wastewater fluidly communicates the electrocoagulation container 16 with the settlement container 14. The inlet 30 of the transfer conduit 28 is preferably not at the bottom 22 of the container, and is not at the top 24 of the container. Instead, the inlet 30 is in a lower half of the container, for example being just above the tapered bottom portion of the container. The inlet 30 may be in a side wall of the electrocoagulation container 16.

A fluid moving means, which is here a transfer pump 32, is configured to selectively move wastewater from the electrocoagulation device 12 to the settlement container 14. This occurs along the transfer conduit 28. Here the transfer pump 32 is along the line of the transfer conduit 28. The pump may be any kind of pump, including a diaphragm pump.

When the pump 32 is operational, wastewater can be pumped from the electrocoagulation device 12 to the settlement container 14. The system is thus in a first condition.

When the pump 32 is not operational, wastewater cannot be pumped from the electrocoagulation device 12 to the settlement container 14. The system is thus in a second condition. This may be due to the transfer conduit 28 extending vertically above the top of the container or the wastewater level in the tank, and therefore the wastewater is unable to pass the vertical barrier that this creates. Alternatively, there may be a valve or similar, which, when in a closed condition, prevents the wastewater from passing to the settlement container 14 from the electrocoagulation device 12.

Whilst a transfer pump is described, it will be appreciated that a transfer pump may not be used, and instead the fluid moving means may comprise an openable and closeable valve which allows for the wastewater to be fed to the settlement container from the electrocoagulation device under gravity.

The system further comprises a sludge removal system or sludge return system for removing sludge from the electrocoagulation container 16 and/or the settlement container 14.

The sludge removal system may include at least one sludge conduit, and a sludge pump 34 for pumping sludge along the sludge conduit and to an outlet 36. The outlet 36 of the sludge conduit may be at a water treatment plant or other processing facility for onward treatment or processing.

Here there is at least one sludge conduit which extends from the electrocoagulation container 16.

Preferably, there are two such sludge conduits: an upper electrocoagulation-sludge conduit 38 and a lower electrocoagulation-sludge conduit 40.

The upper electrocoagulation-sludge conduit 38 may have an inlet 42 at or adjacent to the top 24 of the electrocoagulation container 16, and/or at an expected wastewater level of the electrocoagulation container 16. This may be for receiving sludge which may be buoyant and floating on the wastewater surface which is being treated.

The inlet 44 of the lower electrocoagulation-sludge conduit 40 may be at or adjacent to the bottom 22 of the electrocoagulation container 16 and/or may be below the inlet 30 of the transfer conduit 28 for removing settled solids from the electrocoagulation container 16.

The settlement container 14 also includes a sludge conduit, which may be termed a settlement-sludge conduit 46. An inlet 48 of the settlement-sludge conduit 46 may be at or adjacent to the bottom of the settlement container 14 for removing settled solids from the electrocoagulation container 16. The settlement-sludge conduit 46 may include a non-return valve 50.

The sludge pump 34 may cause sludge to be removed via all the aforementioned sludge conduits, and this may occur simultaneously. The sludge conduits 38, 40, 46 may be interconnected at a venturi 52.

The electrocoagulation device 12 preferably also includes a switch or controller which may be activated when the wastewater level drops below a certain level. As such, the switch may be a low-level float switch 54. The switch 54 may be for deactivating the transfer pump 32, for example, and/or for initiating the addition of new wastewater into the electrocoagulation container 16. The low-level float switch 54 may be at or adjacent to the inlet 30 of the transfer conduit 28.

The outlet 56 of the fluid transfer conduit 28 is preferably at or adjacent to the bottom 22 of the settlement container 14, and may be in a side wall of the settlement container 14. The settlement container 14 preferably has a tapered bottom portion, and in which case the settlement-sludge conduit inlet 48 may be at or adjacent to the bottom of the tapered bottom portion. The outlet 56 of the fluid transfer conduit 28 may be just above the tapered bottom portion.

In between the outlet 56 of the fluid transfer conduit 28 and a top of the settlement container 14 and/or the expected wastewater level of the settlement container 14, there is a baffle 58 for encouraging settlement of precipitates. Here the baffle 58 may comprise a plurality of angled plates, which may be termed lamella plates. The plates may be angled relative to the walls of the settlement container 14 and/or an in use vertical direction.

The settlement container 14 and the electrocoagulation container 16 may have a similar or identical diameter, and the electrocoagulation container 16 may be received above the settlement container 14, or *vice versa.* Here, the electrocoagulation container 16 may be mounted to the settlement container 14, although it will be appreciated that this may not be case or that the settlement container 14 may be mounted to the electrocoagulation container 16.

The system 10 preferably further comprises a second settlement container 60 fluidly communicated with the initial settlement container 14, which may be referred to as a first settlement container 14. The first settlement container 14 and/or the electrocoagulation container 16 may be received in the second settlement container 60, and as such the second settlement container 60 may have a larger diameter than the first settlement container 14 and/or the electrocoagulation container 16.

The first settlement container 14 may have a discharge port 62 for discharging into the second settlement container 60. The second settlement container 60 may have a gravity discharge pipe or other such outlet 63 at or adjacent to a top of the second settlement container 60 for discharging secondary settled effluent.

The second settlement container 60 may be omitted, and, for example, may be replaced by a filter to achieve a desired effluent quality.

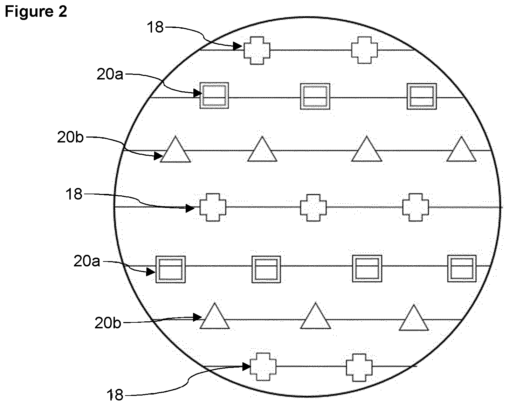

Referring now to Figure 2, there are a plurality of electrodes, which include a plurality of cathodes 18 and a plurality of anodes 20, each of which are preferably cylindrical or substantially cylindrical. For example, the electrodes may be rod shaped or substantially rod shaped, or tube shaped or substantially tube shaped. In addition, the electrodes may comprise mesh. The cathodes 18 and anodes 20 are arranged in an array for allowing ease of scaling up. The electrodes preferably have a spacing or pitch of between 5 mm and 30 mm, and more preferably have a spacing of between 10 mm and 30 mm.

The electrodes preferably have a hexagonal or honeycomb arrangement, providing a uniform spacing between electrodes.

The cathodes 18 are preferably graphite cathodes 18. The anodes 20 preferably include inert anodes 20a, such as titanium anodes 20a, and sacrificial anodes 20b, such as aluminium anodes 20b and/or iron anodes 20b. In Figure 2, the different electrodes are indicated having different shapes or cross-sections, although it will be appreciated that this may be for reference and the electrodes may in fact not have different cross-sections.

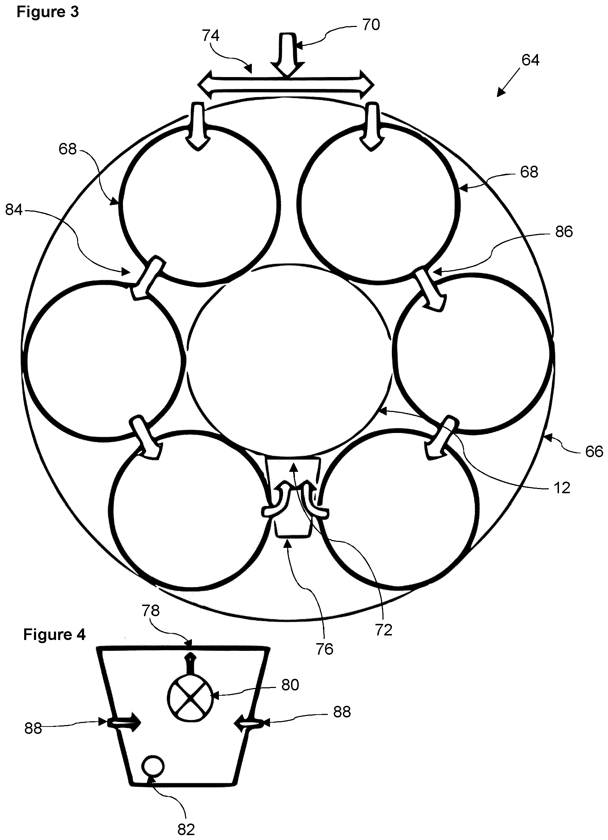

Referring now to Figures 3 to 5, the phosphorus removal system 10 preferably further comprises an ochre filter device 64 upstream of the electrocoagulation device 12 for filtering wastewater before entering the electrocoagulation device 12.

The ochre filter device 64 comprises a filter holding container 66 or tank which holds a plurality of ochre filters 68. The filter holding container 66 has an inlet 70 for receiving wastewater, and an outlet 72 for emitting wastewater to the electrocoagulation device 12.

At the inlet 70 there is a header tank 74, which is for providing a trickle feed of wastewater to the filters 68. The header tank 74 is located above the filters 68 so that wastewater is fed via gravity. The header tank 74 is in turn fed from a sewage system via a cyclonic filter or self-cleaning filter. The cyclonic filter or self-cleaning filter is configured to remove excess total suspended solids prior to entering the ochre filter device 64.

At the outlet 72 of the ochre filter device 64 there is a collection chamber 76, as shown in Figure 4. The collection chamber 76 receives wastewater from the filters 68, and has an opening 78 to the electrocoagulation device 12. As such, the collection chamber 76 can backfill as the electrocoagulation container 16 fills.

The opening 78 is closable and openable via a valve 80, which is preferably a solenoid valve. A switch or controller controls the solenoid valve 80. The switch is preferably a high-level float switch 82, so that when the wastewater level in the collection chamber 76 reaches a sufficient level, the valve 80 closes the opening 78 which prevents further wastewater from flowing into the electrocoagulation device 12.

Referring back to Figure 3, the ochre filter device 64 defines two paths via which wastewater flows; a first filter flow path 84 between the header tank 74 and the collection chamber 76, and a second filter flow path 86 between the header tank 74 and the collection chamber 76. Each filter flow path 84, 86 has a plurality of ochre filters 68. The collection chamber 76 therefore has two inlets 88; one from each flow path.

Here there are a total of six filters 68, with three filters on each filter flow path 84, 86. However, it will be appreciated that other numbers of filters may be considered.

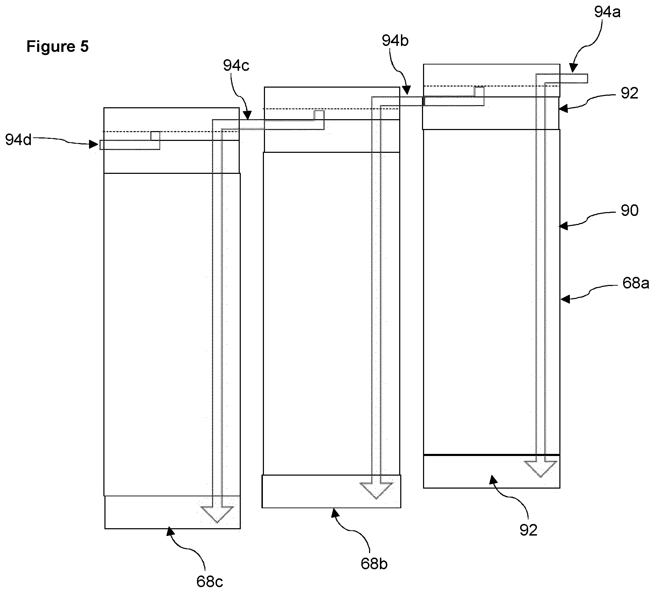

Referring in addition to Figure 5, the filter holding container 66 has a height which is greater than each filter 68. For example, the filter holding container 66 may have a height of 1000 mm and each filter 68 may have a height of 800 mm. This allows for a vertical offset between each filter 68 and between the electrocoagulation container 16, as indicated in Figure 5. The filter holding container 66 may have a diameter of 1000 mm.

Each ochre filter 68 may comprise a container, tank or cylinder containing ochre 90. The ochre 90 may be in granular or pelletised form, for example. The ochre 90 may be sandwiched between layers of gravel 92. There may be clearance within the container of the filter, above the upper layer of gravel 92 so that wastewater may accumulate above the gravel 92 in the container. There may be a pipe or conduit connecting to the filters 68. For example, there may be a first conduit 94a from the header tank 74 to the first filter 68a, there may be second conduit 94b interconnecting the first filter 68a and a second filter 68b, a third conduit 94c may interconnect the second filter 68b and a third filter 68c, and/or a fourth conduit 94d may interconnect the third filter 68c and the collection chamber 76. The conduits 94a, 94b, 94c, 94d may be at or adjacent to the top of the respective filter or filters.

The ochre may be mine drainage ochre.

In use, a supply of wastewater, originating from a sewage system, is fed or pumped into the header tank 74 via the self-cleaning filter. Since the proximal filters or first filters 68a of each filter flow path 84, 86 are fluidly communicated with the header tank 74 and are at a lower vertical level, the wastewater then trickle feeds, under gravity, to the first filters 68a.

In the first filter 68a, the wastewater moves downwards through the gravel 92 and is filtered through the ochre 90. Phosphorus in the wastewater reacts with the ochre 90, for example calcium in the ochre 90, to produce phosphate and so remove phosphorus from the wastewater. The phosphates may accumulate or be deposited on or amongst the ochre grains. Periodically, the ochre may be removed and processed to separate the phosphate for reuse.

The wastewater accumulates in the container of the first filter 68a, and then trickle feeds under gravity to the second filter 68b, via the second conduit 94b. The phosphorus removal process is repeated, and so further phosphorus is removed. The wastewater moves to the third filter 68c where the process is repeated, before flowing into the collection chamber 76 which subsequently flows into the electrocoagulation container 16 via the opening 78. The electrocoagulation container backfills the collection chamber 16 once it is sufficiently filled.

Once the collection chamber 76 has been backfilled, the high-level float switch 82 is triggered which closes the associated solenoid valve 80 and thereby prevents further wastewater from moving from the collection chamber 76 to the electrocoagulation container 16.

Since the solenoid valve 80 is closed, the wastewater entering the ochre filter device 64 backfills and is held in the clearance in the ochre filters 68.

The electrocoagulation container 16 may be filled to a level such that the wastewater level is at or adjacent to the inlet 42 of the upper electrocoagulation-sludge conduit 38. Once the wastewater is in the electrocoagulation container 16, the electrodes may be activated. An electrical current may be passed through the electrodes, the current density being 1 mA/cm², for example. This may cause the phosphorus in the wastewater to react with the aluminium or iron of the sacrificial anode 20b, creating a phosphate precipitate.

The phosphorus precipitate which is buoyant may float on the surface of the wastewater and may be removable via the upper electrocoagulation-sludge conduit 38. The phosphorus precipitate which is not buoyant may settle to the bottom 22 of the electrocoagulation container 16, the taper directing it to the inlet 44 of the lower electrocoagulation-sludge conduit 40. The sludge may settle in an inclined section of the lower electrocoagulation-sludge conduit 40.

After a given processing time, which may be, for example, 20 minutes, the sludge pump 34 may activate which may draw in sludge from the upper electrocoagulation-sludge conduit 38 and the lower electrocoagulation-sludge conduit 40. The sludge pump 34 may be activated only for a short duration, which prevents too much wastewater being removed together with the sludge. The sludge pump 34 at the same time also removes settled sludge from the previously filled first settlement container 14.

The transfer pump 32 may then activate, causing the wastewater in the electrocoagulation container 16 to move through the transfer conduit 28 and be discharged into the first settlement container 14. Once the low-level float switch 54 in the electrocoagulation container 16 is activated, due to the falling wastewater level in the electrocoagulation container 16, the transfer pump 32 may deactivate. The electrocoagulation container 16 may then be refilled from the collection chamber 76 via the low-level float switch 54 also triggering the opening of the associated solenoid valve 80 for electrocoagulation of new wastewater.

The wastewater from the transfer conduit 28 is input into the first settlement container 14 and may fill the first settlement container 14. The lamella plates may encourage entrained phosphate precipitates to settle to the bottom 22 of the first settlement container 14, where they may be removed via the settlement-sludge conduit 46. The wastewater may take a similar or identical processing time, for example, 20 minutes, to settle phosphate precipitates as the electrocoagulation device 12.

After the processing time, the wastewater in the first settlement container 14 may then be discharged into the second settlement container 60 via the discharge port 63 as new wastewater is discharged into the first settlement container 14 via the transfer conduit 28 from the electrocoagulation container 16. Further settling may occur in the second settlement container 60 before the wastewater is then discharged as effluent or pumped onwards for further processing as required.

It will be appreciated that a general sequencing controller, including a timing element, may be required that together or separately regulates the flow into or out of the ochre filter device, the collection chamber, the electrocoagulation container, the first settlement container, the second settlement container, and/or the sludge removal system.

Phosphates which have been removed via the sludge removal system and/or the ochre may be processed and/or recycled. The phosphates may have agricultural uses, in fertiliser production, for example.

It is therefore possible to provide a phosphorus removal system which removes phosphorus from wastewater via electrocoagulation in an electrocoagulation tank. The wastewater can then be removed from the electrocoagulation tank into a settlement tank for settlement of phosphate precipitates so that new wastewater can be introduced into the electrocoagulation tank. This increases the speed of processing. An upstream ochre filter provides initial phosphorus removal whilst utilising a waste material. An expandable or modular electrode array can be used for the electrocoagulation to allow for the system to be easily scaled up or down as required, whilst still maintaining maximum effectiveness.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. A phosphorus removal system (10) for removing phosphorus from wastewater, the phosphorus removal system (10) comprising:
an electrocoagulation device (12) for removing phosphorus from wastewater via electrocoagulation, the electrocoagulation device (12) including an electrocoagulation container (16) for receiving wastewater, and at least one cathode (18) and at least one anode (20) in the electrocoagulation container (16);
a settlement container (14) fluidly communicable with the electrocoagulation container (16); and
a fluid moving means (32) configured to selectively move wastewater from the electrocoagulation device (12) to the settlement container (14);
so that first and second conditions are adoptable by the system (10), wherein in the first condition wastewater is movable from the electrocoagulation device (12) to the settlement container (14), and wherein in the second condition wastewater is not movable from the electrocoagulation device (12) to the settlement container (14).

2. A phosphorus removal system (10) as claimed in claim 1, wherein the fluid moving means comprises a pump (32).

3. A phosphorus removal system (10) as claimed in claim 1 or claim 2, wherein the electrocoagulation container (16) and the settlement container (14) are communicated via a conduit, the conduit having an inlet (30) at the electrocoagulation container (16) which in-use is offset from a bottom and a top of the electrocoagulation container (16).

4. A phosphorus removal system as claimed in any one of the preceding claims, wherein there is at least one sacrificial anode (20b) and at least one inert anode (20a).

5. A phosphorus removal system (10) as claimed in any one of the preceding claims, wherein the or each cathode (18) and the or each anode (20) has a rod shape or is cylindrical.

6. A phosphorus removal system (10) as claimed in any one of the preceding claims, wherein the cathodes (18) and anodes (20) are arranged in a hexagonal or honeycomb array.

7. A phosphorus removal system (10) as claimed in any one of the preceding claims, wherein the settlement container (14) comprises a baffle (58) for encouraging settlement, the baffle (58) comprising a plurality of plates.

8. A phosphorus removal system (10) as claimed in any one of the preceding claims, further comprising a sludge removal system comprising at least one sludge pump (34) and an electrocoagulation-sludge conduit (38, 40) fluidly communicated with the electrocoagulation container (16), the sludge pump (34) being configured to pump sludge from the electrocoagulation container (16) via the electrocoagulation-sludge conduit (38, 40), wherein the electrocoagulation-sludge conduit (38, 40) comprises a first electrocoagulation-sludge conduit (38) communicated with an in-use upper portion of the electrocoagulation container (16) and a second electrocoagulation-sludge conduit (40) communicated with an in-use lower portion of the electrocoagulation container (16).

9. A phosphorus removal system (10) as claimed in any one of the preceding claims, further comprising a further settlement container (60) fluidly communicated with the said settlement container (14).

10. A phosphorus removal system (10) as claimed in any one of the preceding claims, further comprising an ochre filter device (64) upstream of the electrocoagulation device (12) for removing phosphorus from wastewater.

11. A phosphorus removal system (10) as claimed in claim 10, wherein the ochre filter device (64) comprises a plurality of ochre filters (68) which are serially arranged so that wastewater is passable through each ochre filter (68) on a filter flow path.

12. A phosphorus removal system (10) as claimed in claim 10 or 11, wherein the ochre filter device (64) comprises a plurality of ochre filters (68) and two filter flow paths (84, 86), each filter flow path having a plurality of ochre filters (68).

13. A method of removing phosphorus from wastewater, the method comprising:
a) providing an electrocoagulation device (12) having an electrocoagulation container (16), and at least one cathode (18) and at least one anode (20) in the electrocoagulation container (16);
b) discharging wastewater into the electrocoagulation container (16);
c) removing phosphorus from the wastewater via electrocoagulation using the anode (20) and cathode (18);
d) initiating a fluid moving means (32) to move wastewater from the electrocoagulation container (16) into a settlement container (14);
e) stopping the fluid moving means (32);
f) discharging further wastewater into the electrocoagulation container (16).

14. A phosphorus removal system (10) for removing phosphorus from wastewater, the phosphorus removal system comprising:
an electrocoagulation device (12) for removing phosphorus from wastewater via electrocoagulation, the electrocoagulation device (12) including an electrocoagulation container (16) for receiving wastewater, and at least one cathode (18) and at least one anode (20) in the electrocoagulation container (16); and
an ochre filter device (64) upstream of the electrocoagulation device (12) for removing phosphorus from wastewater.

15. A phosphorus-removal electrocoagulation electrode array comprising a plurality of cathodes (18) and a plurality of anodes (20) in a hexagonal or honeycomb arrangement.
